# FASCICULE DE BREVET EUROPEEN

(11) **EP 1 758 743 B1**
(45) Date de publication et mention de la délivrance du brevet: **06.08.2008**
(21) Numéro de dépôt: 05749213.4
(22) Date de dépôt: 27.05.2005
(51) Int. Cl.: B60C 11/12, B29D 30/06

(54) **BANDE DE ROULEMENT AYANT DES INCISIONS ZIGZAG ET LAMES POUR LE MOULAGE DE TELLES INCISIONS**
ZICKZACK-EINSCHNITTE UMFASSENDE REIFENLAUFFLÄCHE UND MESSER ZUM FORMEN SOLCHER EINSCHNITTE
TYRE TREAD COMPRISING ZIGZAG INCISIONS AND BLADES FOR MOULDING SUCH INCISIONS

(30) Priorité: 16.06.2004 FR 0406548
(43) Date de publication de la demande: 07.03.2007
(73) Titulaire: Société de Technologie MICHELIN, 63000 Clermont-Ferrand (FR); Michelin Recherche et Technique S.A., 1763 Granges-Paccot (CH)
(72) Inventeur: PERRIN, Frédéric, Beaumont, 63110 (FR); MUS, Jean-Marie, Marsat, 63200 (FR); MICHAUDET, Elisabeth, Riom, 63200 (FR); MARTIN, Bruno, Combronde, 63460 (FR)
(74) Mandataire: Diernaz, Christian
(86) Numéro de dépôt international: PCT/EP2005/052434
(87) Numéro de publication internationale: WO 2005/123420

(56) Documents cités:
- EP-A- 0 952 011
- EP-A- 1 190 871
- PATENT ABSTRACTS OF JAPAN vol. 2003, no. 03, 5 mai 2003 (2003-05-05) & JP 2002 321509 A (TOYO TIRE & RUBBER CO LTD), 5 novembre 2002 (2002-11-05)

## Description

L'invention concerne les bandes de roulement pour pneumatiques et en particulier les incisions dont sont pourvues de telles bandes.

Un pneumatique comprend une bande de roulement dont la surface radialement à l'extérieur, dite surface de roulement, correspond à la surface du pneumatique qui est destinée à venir en contact avec la chaussée pendant le roulage du pneumatique. Cette bande comprend sur sa surface de roulement une sculpture formée d'éléments de relief, nervures et/ou blocs, séparés les uns des autres dans le sens transversal et/ou circonférentiel par des découpures sous la forme de rainures d'orientation générale transversale et/ou circonférentielle.

Pour des roulages sur sol rendu glissant, par la présence d'eau notamment, il est connu de pourvoir les éléments de relief de la sculpture d'une bande de roulement avec un plus ou moins grand nombre d'incisions, c'est-à-dire de découpures de faible largeur comparativement aux largeurs des rainures (par rainure on entend une découpure de largeur moyenne supérieure ou égale à 2 mm). Une incision correspond à l'espace limité par des faces de matériau en caoutchouc situées en vis-à-vis et distantes d'une distance moyenne qui peut varier en fonction de la position de l'incision dans le pneumatique lorsque celui-ci roule.

Tout l'intérêt de la présence d'un grand nombre d'incisions réside dans la formation d'une grande quantité d'arêtes à l'intersection des faces limitant chaque incision avec la surface de roulement de la bande.

En règle générale, la présence d'une incision débouchant sur la surface de roulement de la bande de roulement, cette incision ayant une direction moyenne définie comme la direction rectiligne passant par ses extrémités sur la surface de roulement, a pour conséquence une diminution de la rigidité de l'élément de sculpture dans lequel est formé ladite incision.

De ce fait et compte tenu de la nécessité d'avoir un grand nombre d'arêtes de mélange de caoutchouc formées par l'intersection des parois délimitant les incisions, la bande de roulement pourvue d'une pluralité d'incisions présente une diminution très sensible de sa rigidité dans une direction parallèle et une direction perpendiculaire à la direction moyenne des incisions (diminution de la rigidité de cisaillement sous un effort tangent à la surface des éléments de relief au passage dans le contact). En pratique, une bande de roulement peut comporter une pluralité d'incisions ayant toutes sensiblement la même orientation. Perpendiculairement à cette orientation, un besoin existe de retrouver un niveau approprié de rigidité.

Il est connu de réaliser des incisions dont la forme est ondulée ou en zigzag au moins dans une direction (soit la direction de la profondeur, soit dans la direction de la longueur de l'incision, soit dans les deux directions). Ce type d'incision n'atténue en rien la variation de rigidité dans une direction perpendiculaire à la direction moyenne de l'incision.

EP-A- 952 011 montre une bande de roulement correspondant au préambule de la revendication 1.

L'objet de l'invention est une bande de roulement pourvue d'une pluralité d'incisions créant une importante longueur d'arêtes tout en limitant la réduction de rigidité et en particulier dans une direction perpendiculaire à la direction moyenne de l'incision.

Dans ce but, la bande de roulement selon l'invention comprend une sculpture dont la partie externe forme une surface de roulement destinée à venir en contact avec la route pendant le roulage d'un pneumatique équipé avec ladite bande, cette sculpture étant composée d'une pluralité d'éléments de relief sous forme de blocs et/ou de nervures, ces éléments de sculpture étant délimités par des rainures. Par ailleurs, une pluralité de ces éléments de relief sont pourvus d'au moins une incision de largeur inférieure à la largeur des rainures, chaque incision étant orientée selon une orientation moyenne (de 0° à 90°) définie comme étant l'angle entre une droite passant par les extrémités de l'incision sur la surface de roulement et la direction transversale de la bande de roulement (cette direction correspond à la direction axiale selon l'axe de rotation d'un pneumatique équipé avec la bande selon l'invention). Chaque incision est délimitée par des parois de mélange de caoutchouc et comprend au moins deux portions dont l'orientation moyenne, mesurée par rapport à la direction transversale est différente de l'orientation moyenne de l'incision. Cette bande est caractérisée en ce que sur au moins certaines desdites portions ayant une orientation différente de l'orientation moyenne de l'incision, il est formé, sur au moins une des parois délimitant l'incision, au moins une protubérance réduisant localement la largeur de l'incision d'au moins 50% de sa plus grande largeur de manière à créer par rapprochement un contact limitant la déformation dans la direction perpendiculaire à la direction moyenne (ou orientation moyenne) de l'incision.

Préférentiellement, la surface totale de protubérance sur une paroi est au plus égale à 60% de la surface totale de la paroi.

Grâce à cette géométrie d'incision, il est possible de réduire significativement les déplacements relatifs des parois d'une incision par rapport aux parois en vis-à-vis : au passage dans la zone de contact avec la chaussée, la fermeture de l'incision est rendue plus efficace encore par la réduction locale de sa largeur tout en conservant une longueur suffisante d'arêtes dans les portions de l'incision ne se refermant pas en totalité.

Par surface totale de protubérance sur une face, on entend la somme des surface de toutes les protubérances d'une même face. La surface d'une protubérance correspond à la surface sur la face considérée délimitée par le contour de ladite protubérance.

Préférentiellement, la ou les protubérances sur une même paroi sont réparties entre la surface de roulement et une profondeur égale à 60% de la profondeur de l'incision mesurée sur cette paroi à partir de la surface extérieure du pneumatique.

Avantageusement, l'angle des parois pourvues de protubérances est au moins égal à 15° avec l'orientation moyenne de l'incision. Par angle d'une paroi, on entend l'angle que fait la trace sur la surface de roulement de la paroi considérée.

Une variante intéressante consiste à pourvoir les parois en vis-à-vis d'une même portion d'incision avec des protubérances se faisant face. Dans une autre variante intéressante, tout en ayant une réduction de la largeur de l'incision par rapport à la largeur maximale de cette incision, il est formé, sur la paroi en vis-à-vis d'une paroi comportant au moins une protubérance, un creux dans lequel ladite protubérance vient se loger au passage dans le contact pour réduire davantage encore la variation de rigidité du fait de la présence de l'incision.

Dans une autre variante, il est prévu de pourvoir au moins certaines des parois avec une rugosité qui renforce l'effet de limitation des mouvements relatifs entre lesdites parois lorsque ces dernières se referment en passant dans la zone de contact avec la chaussée. Cette rugosité peut prendre, par exemple, la forme d'une pluralité de rainures et/ou nervures orientées notamment dans la direction de la profondeur de l'incision (c'est-à-dire dans une direction faisant un angle de 90° avec la trace de l'incision à la surface extérieur du pneumatique) ou dans toute autre direction. Ces rainures peuvent être faites sur une partie de la surface des parois délimitant l'incision ou sur la totalité de ladite surface.

L'invention est avantageuse puisqu'il est désonnais possible de concevoir une sculpture de bande de roulement pourvue d'une pluralité d'incisions d'orientation moyenne oblique (c'est-à-dire dont l'orientation moyenne est comprise entre 15° et 50° avec la direction axiale ou transversale sur le pneumatique) sans pour autant avoir une diminution de rigidité trop marquée et éventuellement pénalisante sur le plan de certaines performances attendues d'un pneumatique et notamment d'un pneumatique pour véhicule de tourisme.

Dans une autre variante, au moins certaines des incisions sont délimitées par des facettes ayant, en outre, dans la direction de l'épaisseur de la bande de roulement des inclinaisons différentes ; vue en coupe dans un plan perpendiculaire à la direction moyenne de l'incision, lesdites facettes présentent des traces en zigzag ou ondulées. On peut avantageusement prévoir que ces facettes sont en partie pourvue d'au moins une protubérance réduisant localement la largeur de l'incision d'au moins 50% de sa largeur, la surface totale de protubérance sur une facette étant au plus égale à 60% de la surface totale de la facette. Cette forme de réalisation est particulièrement avantageuse sur le plan de la réalisation d'une lame destinée à mouler l'incision et également sur la résistance aux efforts de moulage : il est en effet primordial de pouvoir conserver la géométrie de la lame malgré un grand nombre de moulages et tout particulièrement dans le cas d'une lame de faible épaisseur (inférieure à 0.6 mm).

L'invention propose également une lame d'épaisseur moyenne pour mouler une incision, ladite lame comprenant une pluralité de parties formant des ondulations ou des zigzags dans une première direction XX' et des ondulations ou des zigzags dans une deuxième direction YY', cette dernière direction étant perpendiculaire à la direction XX', cette lame comprenant des parties en creux réduisant l'épaisseur de l'incision d'au moins 50%.

Une méthode d'obtention d'une telle incision consiste par exemple à former une lame et à enlever la quantité de métal appropriée pour créer des creux destinés au moulage de protubérances sur une bande de roulement et ensuite à lui donner par poinçonnage une forme générale en zigzag. Les creux ainsi formés sont fermés par un voile très fin prévu pour mouler les parties de faible largeur de l'incision.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre la surface d'un élément de sculpture d'une bande de roulement comportant une d'incision selon l'invention ;

La figure 2 montre la même vue que celle de la figure 1 dans le contact d'un pneumatique avec le sol ;

La figure 3 montre une variante de lame destinée à mouler une incision selon l'invention ;

La figure 4 montre une coupe selon la ligne IV-IV réalisée sur la figure 3 ;

La figure 5 montre une variante d'une incision selon l'invention ;

La figure 6 montre une nervure comportant une pluralité d'incisions selon une autre variante de l'invention.

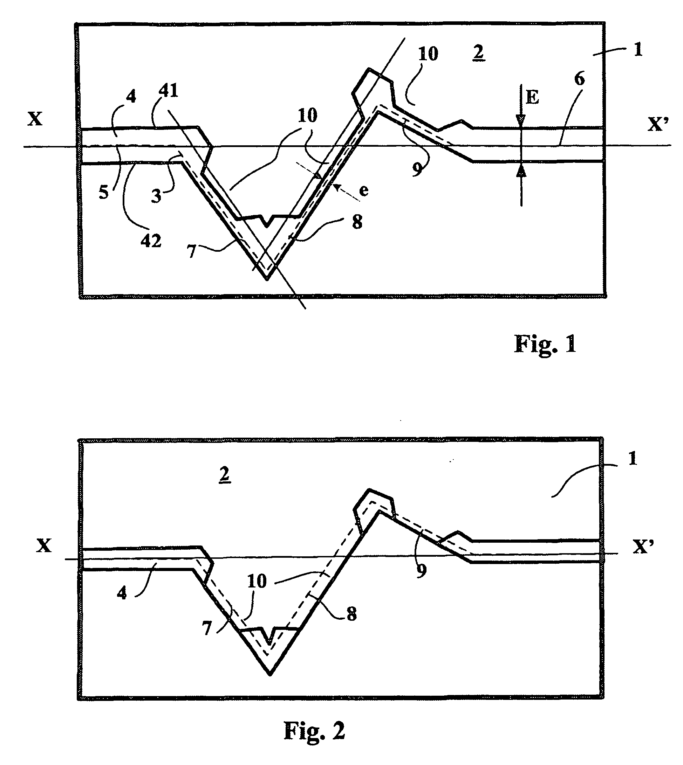

Sur la figure 1, on a représenté, vu en plan, la surface de contact 2 d'un élément de relief (bloc de sculpture) d'une bande de roulement selon l'invention. Cette surface de contact 2 forme une partie de la surface de roulement de ladite bande. On distingue la trace 3 d'une incision 4 d'orientation moyenne XX' faisant un angle nul avec la direction transversale de la bande (cette direction est confondue avec la direction de l'axe de rotation lorsque la bande équipe un pneumatique).

Par trace, on entend une ligne moyenne fictive tracée sur la surface de roulement sensiblement à égale distance des arêtes 41, 42 des parois de mélange de caoutchouc délimitant l'incision et coupant la surface de contact 2.

Dans le cas présenté, cette trace 3 reste inchangée dans l'épaisseur de la bande de roulement ; cela signifie que la trace est la même quelque soit l'état d'usure de la bande (neuf, mi usure).

Cette trace 3 comporte des parties d'extrémité 5, 6 ayant la même orientation que l'orientation moyenne XX' de l'incision et des parties intermédiaires 7, 8, 9 faisant des angles égaux à 45° avec ladite orientation moyenne XX'.

Sur chacune des parois délimitant l'incision 4 et dont les traces forment les parties intermédiaires 7, 8, 9 sur la surface de roulement, il est prévu une protubérance 10 destinée à réduire la largeur (ou de manière équivalente l'épaisseur) de l'incision de l'ordre de 70%. La largeur maximale E de l'incision est ici de 0.6 mm, tandis que la largeur minimale e et de 0.2 mm dans sa partie étroite.

Sur la figure 2 est représentée la même incision 4 à son passage dans la zone de contact avec la chaussée : on constate que sur les parois comportant au moins une protubérance 10, le contact est établi entre les parois en vis-à-vis, ce qui, du fait des forces de frottement qui s'établissent alors entre lesdites parois, permet d'augmenter la rigidité en cisaillement dans des directions différentes de la direction moyenne de l'incision et par là de retrouver une rigidité dans une direction perpendiculaire à ladite direction moyenne XX' de l'incision.

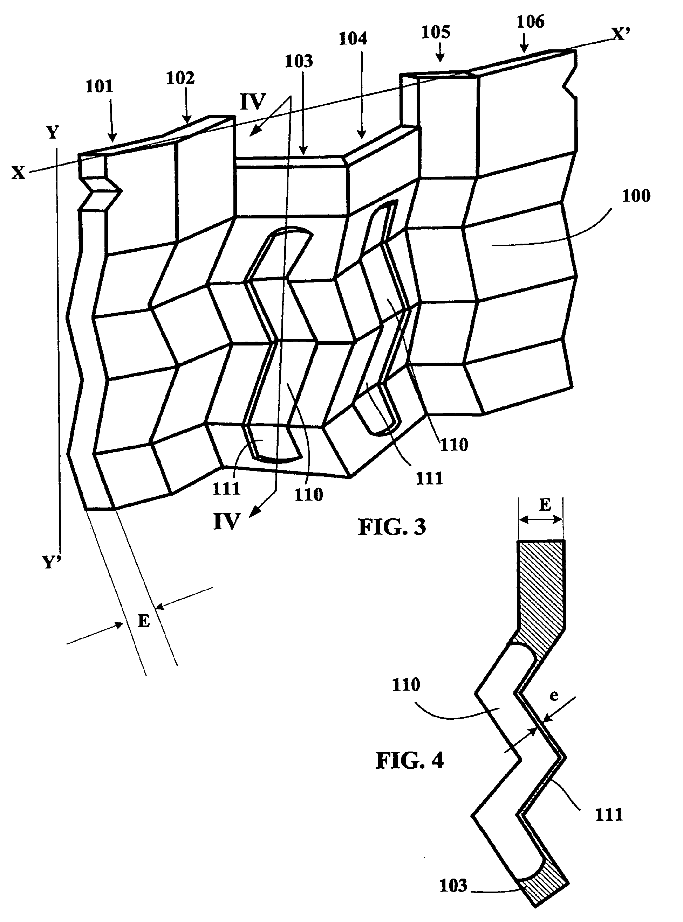

La figure 3 montre une lame 100 pour mouler une incision selon l'invention. Cette lame 100 en métal a une épaisseur maximale moyenne E de 0.6 mm (cette épaisseur est sensiblement égale à la largeur de l'incision moulée avec cette lame). Cette lame 100 a une géométrie générale en zigzag dans deux directions principales. La première direction, XX', correspond à la direction de la trace de l'incision moulée avec cette lame sur la surface de roulement ; la seconde direction, YY', correspond à une direction perpendiculaire à la direction XX' et équivalente à la direction de l'épaisseur de la bande de roulement à l'intérieur de laquelle est moulée l'incision avec la lame 100. Une incision moulée avec cette lame 100 a une trace sur la bande de roulement qui a une forme en zigzag, et en outre, une forme en zigzag dans la profondeur de la bande de roulement.

La lame 100 montrée comprend dans la direction XX' une succession de six parties référencées 101 à 106. Chacune de ces parties de lame est elle même constituée dans la direction YY' par une succession de facettes faisant entre elles des angles différents de 180°.

Dans l'exemple représenté de manière très schématique, les premières facettes de chacune des parties 101, 102, 103, 104, 105, 106 sont destinées à être fixées dans un moule, les autres facettes étant destinées à mouler une incision dans une bande de roulement. Sur les facette des parties centrales 103 et 104, on a usiné un évidement ou zone en creux 110 de façon qu'un voile de métal 111 de faible épaisseur soit conservé pour le moulage d'une partie étroite d'incision. L'épaisseur de ce voile 111 est inférieur à 0.1 mm voire inférieure à 0.05 mm. Préférentiellement la surface d'un évidement est au plus égale à 50% de la surface de la partie de lame sur laquelle il est réalisé (dans le cas présent de l'ordre de 30%).

La figure 4 montre une coupe selon la ligne IV-IV de la lame 100 montrée avec la figure 3. Le plan de coupe choisi passe par l'évidement 110. Un avantage de ce type de lame, est qu'il est ainsi possible d'obtenir des épaisseurs très petites (moins de 0.1 mm) localement tout en conservant une rigidité d'ensemble de la lame 100 suffisante pour permettre un grand nombre de moulages d'incisions dans une bande de roulement en matériau caoutchoutique. Cet avantage est particulièrement intéressant dans le cas de lames ayant des ondulations ou des zigzag dans la direction YY' (direction de l'épaisseur de la bande de roulement) et qui de ce fait sont particulièrement sensibles aux efforts de moulage.

Pour obtenir une telle lame on procède de la manière suivante :
- usinage dans une plaque de métal ayant l'épaisseur moyenne de la lame voulue et aux emplacements prévus d'au moins une partie en creux tout en conservant un voile de métal d'une épaisseur inférieure à 50% de l'épaisseur moyenne maximale de ladite plaque ;
- mise en forme de la plaque de métal pourvue d'au moins une partie en creux selon la forme générale de la lame comprenant une pluralité d'ondulations ou de zigzags dans deux directions différentes (par exemple, dans deux directions perpendiculaires entre elles).

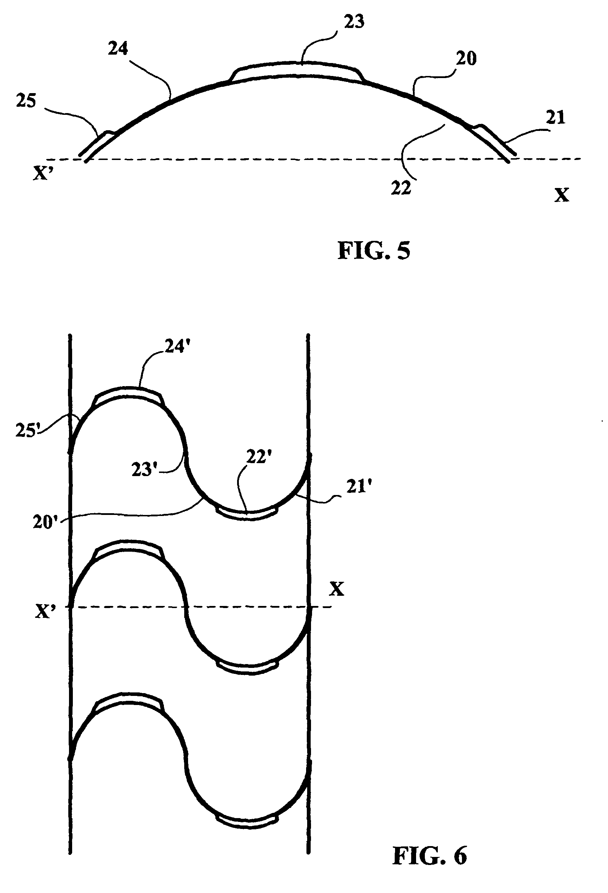

Sur la figure 5, on a représenté, vu en plan sur la surface de roulement d'une bande de roulement, la trace 20 d'une incision d'orientation moyenne XX' et de géométrie générale cylindrique (l'axe de ce cylindre est sensiblement perpendiculaire à la surface de roulement). La direction XX' fait un angle nul avec la direction transversale de la bande. Dans l'épaisseur de la bande de roulement (c'est-à-dire perpendiculairement au plan de la figure) l'incision présente des ondulations limitant les mouvements relatifs des faces en vis-à-vis.

Cette trace en arc de cercle comprend deux parties intermédiaires 22, 24 présentant sur les parties correspondantes de l'incision des largeurs réduites par rapport à la largeur moyenne des autres parties de l'incision (parties d'extrémité 21, 25, partie médiane 23). Les parties intermédiaires 22, 24 ont des traces sur la surface de roulement qui présentent une orientation qui est comprise entre 10° et 30° dans le cas montré (par orientation, on entend ici l'angle que fait une droite tangente en un point quelconque de la partie considérée).

Dans une autre variante d'incision selon l'invention montrée avec la figure 6, l'incision comprend deux parties cylindriques disposées dans le prolongement l'une de l'autre pour former sur la surface de roulement de la bande de roulement une trace 20' en forme de lettre S. L'orientation moyenne de cette incision correspond à une droite XX' passant par les points d'extrémité de la trace de l'incision. Cette trace 20' comprend trois régions 21', 23' et 25' de largeur réduite comparativement aux largeurs des deux régions 22' et 24' définies comme étant des régions pour lesquelles les droites tangentes en tout point de leur trace font avec la direction moyenne XX' de l'incision des angles faibles voire nul (par faible on entend ici un angle plus petit que 10°). La direction moyenne XX' est confondue avec la direction transversale de la bande (c'est-à-dire une direction perpendiculaire à la direction longitudinale sur la bande).

Bien sûr, l'invention n'est pas limitée aux exemples décrits et représentés et diverses modifications peuvent y être apportées sans sortir du cadre des revendications suivantes.

## Revendications

1. Bande de roulement pour pneumatique comprenant une sculpture dont la partie externe forme une surface de roulement destinée à venir en contact avec la chaussée pendant le roulage d'un pneumatique équipé avec ladite bande, cette sculpture étant composée d'une pluralité d'éléments de relief 1 sous forme de blocs et/ou de nervures délimités par des rainures ayant une largeur, une pluralité de ces éléments de relief (1) étant pourvus d'au moins une incision (4) ayant une largeur maximale (E) inférieure à la largeur des rainures, chaque incision (4) étant orientée selon une orientation moyenne XX' définie comme étant l'angle entre une droite passant par les extrémités de l'incision sur la surface de roulement et la direction transversale de la bande de roulement, chaque incision (4) étant délimitée par des parois de mélange de caoutchouc et comprenant au moins deux portions dont les orientations moyennes, mesurées par rapport à la direction transversale sont différentes de l'orientation moyenne de l'incision, cette bande étant **caractérisée en ce qu'**il est formé, au moins sur certaines desdites portions ayant une orientation différente de l'orientation moyenne de l'incision, au moins une protubérance (10) réduisant localement la largeur de l'incision d'au moins 50% de sa plus grande largeur (E) pour permettre un contact de frottement entre les parois opposées au moins dans le contact de la bande de roulement avec la chaussée.

2. Bande de roulement selon la revendication 1 **caractérisée en ce que** la surface totale de protubérance sur une paroi est au plus égale à 60% de la surface totale de la paroi de l'incision.

3. Bande de roulement selon la revendication 1 ou la revendication 2 **caractérisée en ce que** l'angle des parois pourvues de protubérances avec l'orientation moyenne de l'incision est au moins égal à 15°.

4. Bande de roulement selon l'une des revendications 1 à 3 **caractérisée en ce qu'**au moins certaines des parois délimitant une incision sont pourvues avec une rugosité renforçant l'effet de limitation des mouvements relatifs entre lesdites parois.

5. Bande de roulement selon la revendication 4 **caractérisée en ce que** la rugosité comporte une pluralité de nervures orientées sensiblement à 90° par rapport à la trace de l'incision sur la surface de roulement, sur au moins une paroi délimitant une incision.

6. Bande de roulement selon l'une des revendications 1 à 5 **caractérisée en ce qu'**elle comprend une pluralité d'incisions dont l'orientation moyenne XX' fait un angle compris entre 15° et 50° avec la direction transversale.

7. Bande de roulement selon l'une des revendications 1 à 6 **caractérisée en ce que** les incisions dont au moins une paroi est pourvue d'une protubérance, suivent des formes en zigzag, vues en coupe dans un plan perpendiculaire à la direction moyenne de l'incision.

8. Lame 100 d'épaisseur moyenne E pour mouler une incision telle que définie dans les revendications 1 à 7, cette lame 100 comprenant une pluralité de parties formant des ondulations ou des zigzags dans une première direction XX' et des ondulations ou des zigzags dans une deuxième direction YY', cette dernière direction étant perpendiculaire à la direction XX', cette lame 100 comprenant des parties en creux réduisant l'épaisseur de l'incision d'au moins 50%.

9. Procédé pour l'obtention d'une lame 100 destinée à mouler une incision telle que définie dans la bande de roulement selon les revendications 1 à 7, ce procédé étant **caractérisé en ce qu'**il comprend les étapes suivantes:
- usinage dans une plaque de métal et aux emplacements prévus d'au moins une partie en creux tout en conservant un voile de métal d'une épaisseur inférieure à 50% de l'épaisseur moyenne maximale de ladite plaque ;
- mise en forme de la plaque de métal pourvue d'au moins une partie en creux selon la forme générale de la lame 100 comprenant une pluralité d'ondulations ou de zigzags dans deux directions différentes.

## Claims

1. A tyre tread comprising a tread pattern the outer part of which forms a running surface intended to come into contact with the roadway during travel of a tyre fitted with said tread, this tread pattern being composed of a plurality of elements in relief 1 in the form of blocks and/or ribs defined by grooves having a width, a plurality of these elements in relief (1) being provided with at least one incision (4) having a maximum width (E) less than the width of the grooves, each incision (4) being oriented at an average orientation XX' defined as being the angle between a straight line passing through the ends of the incision on the running surface and the transverse direction of the tread, each incision (4) being limited by walls of rubber mix and comprising at least two portions the average orientations of which, measured relative to the transverse direction, are different from the average orientation of the incision, this tread being **characterised in that** there is formed, at least on some of said portions having an orientation different from the average orientation of the incision, at least one protuberance (10) locally reducing the width of the incision by at least 50% of its greatest width (E) to permit frictional contact between the opposing walls at least in the contact of the tread with the roadway.

2. A tread according to Claim 1, **characterised in that** the total surface area of protuberance from a wall is at most equal to 60% of the total surface area of the wall of the incision.

3. A tread according to Claim 1 or Claim 2, **characterised in that** the angle of the walls provided with protuberances with the average orientation of the incision is at least equal to 15°.

4. A tread according to one of Claims 1 to 3, **characterised in that** at least some of the walls defining an incision are provided with an area of roughness which reinforces the effect of limiting the relative movements between said walls.

5. A tread according to Claim 4, **characterised in that** the area of roughness comprises a plurality of ribs oriented substantially at 90° relative to the trace of the incision on the running surface, on at least one wall defining an incision.

6. A tread according to one of Claims 1 to 5, **characterised in that** it comprises a plurality of incisions the average orientation XX' of which forms an angle of between 15° and 50° with the transverse direction.

7. A tread according to one of Claims 1 to 6, **characterised in that** the incisions at least one wall of which is provided with a protuberance have zigzag forms, viewed in section in a plane perpendicular to the average direction of the incision.

8. A strip 100 of average thickness E for moulding an incision as defined in Claims 1 to 7, this strip 100 comprising a plurality of parts forming undulations or zigzags in a first direction XX' and undulations or zigzags in a second direction YY', the latter direction being perpendicular to the direction XX', this strip 100 comprising hollowed parts reducing the thickness of the incision by at least 50%.

9. A process for obtaining a strip 100 intended for moulding an incision as defined in the tread according to Claims 1 to 7, this process being **characterised in that** it comprises the following steps:
- machining into a metal plate and at the locations provided at least one hollowed part while retaining a web of metal of a thickness of less than 50% of the maximum average thickness of said plate;
- shaping of the metal plate provided with at least one hollowed part in accordance with the general shape of the strip 100 comprising a plurality of undulations or zigzags in two different directions.

## Patentansprüche

1. Lauffläche für Luftreifen, umfassend ein Profil, dessen äußerer Teil einen Laufkranz bildet, der dazu gedacht ist, während des Abrollens eines Luftreifens, der mit der genannten Lauffläche ausgestattet ist, mit der Fahrbahn in Berührung zu kommen, wobei dieses Profil aus einer Vielzahl von erhabenen Elementen (1) in Form von Blöcken und/oder Rippen besteht, die von Rillen begrenzt sind, die eine gewisse Breite aufweisen, wobei eine Vielzahl dieser erhabenen Elemente (1) mit mindestens einem Einschnitt (4) versehen ist, der eine Höchstbreite (E) aufweist, die kleiner ist als die Breite der Rillen, wobei jeder Einschnitt (4) in einer mittleren Ausrichtung XX' ausgerichtet ist, die definiert ist als der Winkel zwischen einer Geraden, die durch die Enden des Einschnitts auf dem Laufkranz geht, und der Querrichtung der Lauffläche, wobei jeder Einschnitt (4) durch Wandungen aus Gummimischung begrenzt ist und mindestens zwei Abschnitte umfasst, deren mittlere Ausrichtungen, gemessen im Verhältnis zur Querrichtung, sich von der mittleren Ausrichtung des Einschnitts unterscheiden, wobei die Lauffläche **dadurch gekennzeichnet ist, dass** mindestens in bestimmten Abschnitten der genannten Abschnitte, die eine Ausrichtung aufweisen, die von der mittleren Ausrichtung des Einschnitts verschieden ist, mindestens eine Ausstülpung (10) gebildet ist, die stellenweise die Breite des Einschnitts um mindestens 50 % seiner größten Breite (E) verringert, um einen Reibungskontakt zwischen den gegenüberliegenden Wandungen zu erlauben, zumindest im Kontakt der Lauffläche mit der Fahrbahn.

2. Lauffläche nach Anspruch 1, **dadurch gekennzeichnet, dass** die gesamte Oberfläche der Ausstülpung auf einer Wandung höchstens gleich 60 % der gesamten Oberfläche der Wandung des Einschnitts ist.

3. Lauffläche nach Anspruch 1 oder Anspruch 2, **dadurch gekennzeichnet, dass** der Winkel der Wandungen, die mit Ausstülpungen versehen sind, mit der mittleren Ausrichtung des Einschnitts mindestens gleich 15° ist.

4. Lauffläche nach einem der Ansprüche 1 bis 3, **dadurch gekennzeichnet, dass** mindestens bestimmte Wandungen, die einen Einschnitt begrenzen, mit einer Unebenheit versehen sind, welche die Wirkung zur Begrenzung der relativen Bewegungen zwischen den Wandungen verstärkt.

5. Lauffläche nach Anspruch 4, **dadurch gekennzeichnet, dass** die Unebenheit eine Vielzahl von Rippen umfasst, die im Wesentlichen um 90° im Verhältnis zur Einschnittspur auf dem Laufkranz auf mindestens einer den Einschnitt begrenzenden Wand ausgerichtet sind.

6. Lauffläche nach einem der Ansprüche 1 bis 5, **dadurch gekennzeichnet, dass** sie eine Vielzahl von Einschnitten umfasst, deren mittlere Ausrichtung XX' einen Winkel bildet, der zwischen 15 ° und 50° zur Querrichtung liegt.

7. Lauffläche nach einem der Ansprüche 1 bis 6, **dadurch gekennzeichnet, dass** die Einschnitte, von denen mindestens eine Wand mit einer Ausstülpung versehen ist, Zickzackformen folgen, im Schnitt in einer Ebene gesehen, die zur mittleren Richtung des Einschnitts rechtwinklig ist.

8. Schneide (100) von mittlerer Dicke (E) zum Formen eines Einschnitts, wie er in den Ansprüchen 1 bis 7 definiert ist, wobei diese Scheide (100) eine Vielzahl von Teilen umfasst, die Wellungen oder Zickzackformen in einer ersten Richtung XX' und Wellungen oder Zickzackformen in einer zweiten Richtung YY' bilden, wobei letztere Richtung zur Richtung XX' rechtwinklig ist, wobei diese Schneide (100) vertiefte Teile umfasst, welche die Dicke des Einschnitts um mindestens 50 % verringern.

9. Verfahren zum Erstellen einer Schneide (100), die dazu gedacht ist, einen Einschnitt zu formen, wie er in der Lauffläche nach den Ansprüchen 1 bis 7 definiert ist, wobei dieses Verfahren **dadurch gekennzeichnet, ist, dass** es folgende Schritte umfasst:
- Bearbeiten in einer Metallplatte und an den vorhergesehenen Stellen mindestens eines vertieften Teils, wobei eine Metallschicht, deren Dicke weniger als 50 % der maximalen mittleren Dicke der Platte beträgt, erhalten bleibt;
- Gestalten der Metallplatte, die mit mindestens einem vertieften Teil gemäß der allgemeinen Form der Schneide (100) versehen ist, die eine Vielzahl von Wellungen oder Zickzackformen in zwei verschiedenen Richtungen umfasst.
